(19) Europäisches Patentamt / European Patent Office / Office européen des brevets

(11) **EP 2 351 799 B1**

(12) **EUROPEAN PATENT SPECIFICATION**

(45) Date of publication and mention
of the grant of the patent:
**31.12.2014 Bulletin 2015/01**

(51) Int Cl.:
*C09D 11/00* *(2014.01)*    *B41J 2/01* *(2006.01)*
*B41M 5/00* *(2006.01)*

(21) Application number: **09827597.7**

(22) Date of filing: **19.11.2009**

(86) International application number:
**PCT/JP2009/069627**

(87) International publication number:
**WO 2010/058816 (27.05.2010 Gazette 2010/21)**

(54) **ENERGY BEAM-CURING INKJET INK COMPOSITION**

MIT ENERGIESTRAHLEN HÄRTBARE TINTENSTRAHL-TINTENZUSAMMENSETZUNG

COMPOSITION D'ENCRE À JET D'ENCRE À DURCISSEMENT PAR FAISCEAU ÉNERGÉTIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.11.2008 JP 2008298190**

(43) Date of publication of application:
**03.08.2011 Bulletin 2011/31**

(73) Proprietor: **Hitachi Maxell, Ltd.
Ibaraki-shi, Osaka 567-8567 (JP)**

(72) Inventors:
• **KITO, Katsuyuki
Ibaraki-shi
Osaka 567-8567 (JP)**
• **KOBAYASHI, Satoshi
Ibaraki-shi
Osaka 567-8567 (JP)**

• **KOYAMA, Kunihiko
Ibaraki-shi
Osaka 567-8567 (JP)**

(74) Representative: **Von Kreisler Selting Werner -
Partnerschaft
von Patentanwälten und Rechtsanwälten mbB
Deichmannhaus am Dom
Bahnhofsvorplatz 1
50667 Köln (DE)**

(56) References cited:
EP-A- 1 637 929     WO-A1-2007/013368
WO-A1-2007/036692     JP-A- 2 307 730
JP-A- 2004 131 725     JP-A- 2004 243 548
JP-A- 2006 160 959     JP-A- 2008 081 594
JP-A- 2008 163 206     JP-A- 2008 179 810
JP-A- 2008 195 926     JP-T- 2001 525 479
JP-T- 2006 511 684     US-A1- 2005 159 501

**Description**

The present invention relates to an energy ray-curable inkjet ink composition. Particularly, the present invention relates to an inkjet ink composition suitable for applications requiring that a printed film has stretchability after curing, such as a marking film which is used for decorating vehicles, ships, advertising displays, and wall surfaces of buildings having a three-dimensional shaped surface including irregularities and curved surfaces, and three-dimensional steric display members on which a printed material is sterically formed after printing.

A marking film, for example, a car wrapping film used for decorating vehicles, etc. is generally manufactured by forming a printed film for decoration on one surface of a polymer substrate including a vinyl chloride resin sheet, etc. with inks, and laminating a releasing sheet on the other surface through an adhesive layer. Since the marking film can be directly bonded to materials to be decorated, such as vehicles, etc., and is excellent in workability, it is widespread as a substitute method for a conventional marking method by painting. In addition, a three-dimensional steric display member such as an electrical advertising display is manufactured by printing a printed film including various characters and images on a substrate, and sterically molding a printed material with a molding machine.

In such applications of the marking film, when the marking film is bonded to a material to be decorated, a releasing sheet is peeled off, and an adhesive layer is adhered to the surface of the material to be decorated. However, since a surface of with irregularities and curved surfaces, wrinkles are generated on the marking film, the air is easily trapped between the marking film and the material to be decorated, and the appearance is easily deteriorated. For this reason, it is necessary to apply the marking film to a surface of a material to be decorated while the marking film is stretched and, thereupon, a printed film may be stretched in a certain length together with a substrate in some cases. In addition, also in application in which a printed material such as a three-dimensional steric display member is sterically molded, a printed film may be stretched together with a substrate by bending at molding in some cases. For this reason, in these applications, an ink which does not cause cracking and peeling of a printed film even when the printed film is stretched (for example, 130 % or more) is required.

In addition, upon forming the printed film as above, a printing method by an inkjet printing system which does not require a plate making step, and is suitable for variable printing of many models in small quantities is utilized and, for this reason, it is necessary to use an ink which has a low viscosity, is excellent in the continuous discharge property and has the liquid physical property suitable for printing by an inkjet printing system. From the above viewpoint, an aqueous or solvent inkjet ink, which uses a dye or a pigment as a colorant, has a low viscosity and has stretchability, for satisfying the stretchability for a printed film and the continuous discharge property by an inkjet printing system is mainly used.

However, the aqueous inkjet ink has a problem that when printed on a non-water-absorptive substrate such as a polymer substrate, deteriorated image formation easily occurs due to low attachment of ink liquid droplets, and a problem that since drying of an aqueous solvent is extremely slow, it is necessary to dry the aqueous solvent without laminating marking films immediately after printing. In addition, the marking film is often used outdoors, but the aqueous inkjet ink has inferior water resistance. On the other hand, in the case of a solvent inkjet ink, printing suitability on a non-water-absorptive substrate such as a polymer substrate, and water resistance are excellent, but since it is necessary to dry the ink after printing, not only it takes a long time for drying, but also exhaust equipments for vaporizing an organic solvent, and a solvent recovery mechanism must be provided.

As an inkjet ink for industrial printing, besides the aqueous and solvent inkjet inks, a solvent-free energy ray-curable inkjet ink which is cured with an energy ray such as an ultraviolet ray has been developed (e.g. Japanese Patent No. 3619778). Since such an energy ray-curable inkjet ink generates radicals by the irradiation of an energy ray, and induces polymerization, a polymerization reaction proceeds very fast, and curability is excellent. In addition, since no solvent is used, the ink has advantages that adherence to a substrate and the quick drying property are excellent and, at the same time, it causes little environmental pollution. For this reason, it is conceivable that the aforementioned energy ray-curable inkjet ink is used in place of the aqueous or solvent inkjet ink even in an application of the aforementioned marking film or the like. Since the energy ray-curable inkjet ink cures a printed film by a polymerization reaction of a polymerizable compound, due to the requisite use of a polymerizable compound having as high curability as possible, a hard printed film having no stretchability, as proposed in Japanese Patent No. 3619778, has been demanded. Therefore, a printed film formed using the energy ray-curable inkjet ink is fundamentally impossible to be stretched, and cracking and peeling are easily generated in the printed film by stretching.

A study for imparting softness to a printed film using the energy ray-curable inkjet ink has also been performed, and an energy ray-curable inkjet ink containing a reactive diluent and a reactive oligomer as polymerizable compounds, in which both of glass transition temperatures of a polymer of the reactive diluent alone and a polymer of the reactive oligomer alone are -25 to 70°C is also proposed (e.g. JP-A 2004-131725).

However, even the energy ray-curable inkjet ink disclosed in JP-A 2004-131725 cannot suppress the occurrence of cracking and peeling of a printed film in an application in which a printed film is stretched 130 % or more together with a substrate after curing of a marking film and a three-dimensional steric display member. In the above applications, resistance to alcohol is also required, but it is not studied in Japanese Patent No. 3619778. Furthermore, in Japanese Patent No. 3619778, it is necessary to use a polyfunctional monomer (difunctional monomer) as a reactive diluent so as to form a continuous printed film having adherence and scratch resistance (Japanese Patent No. 3619778, paragraphs [0028] and [0029]). Thus, the curing of the polymerizable compound is enhanced and the printed film is made harder. In addition, an ink containing a polyfunctional monomer and a polyfunctional reactive oligomer tends to have a high viscosity. Therefore, the continuous discharge property tends to be deteriorated in the inkjet printing system.

As a means for curing the aforementioned energy ray-curable inkjet ink, a low pressure mercury lamp, a high pressure mercury lamp, a super-high pressure mercury lamp, a xenon lamp and a metal halide lamp are hitherto used. Since heat is easily generated when an ultraviolet ray is irradiated by these irradiation means, a substrate is easily curled and waved in an application such as a marking film which uses a polymer substrate. For this reason, recently, it is proposed to use a low energy irradiating means such as a ultraviolet ray LED and a ultraviolet ray laser having small size and generating less heat in place of the aforementioned mercury lamp and metal halide lamp. However, the energy ray-curable inkjet inks described in Japanese Patent No. 3619778 and JP-A 2004-131725 have a problem that sufficient curability and adherence cannot be attained with the low energy irradiating means. In order to improve curability and adherence, it is also conceivable that a content of a polyfunctional polymerizable compound having many ethylenic double bonds is increased, but, in this case, an ink has a further high viscosity and, at the same time, a printed film becomes hard, resulting in further reduction of stretchability.

An object of the present invention is to provide an energy ray-curable inkjet ink composition which does not cause cracking and peeling on a printed film and has excellent stretchability even when an energy ray-curable inkjet ink is applied to utility case where a printed film together with a substrate is stretched after printing of a marking film and a three-dimensional steric display film and, at the same time, which has good solvent resistance and is excellent in curability and adherence even when a low energy irradiating means is used, and is excellent in the continuous discharge property upon printing by an inkjet printing system.

To achieve the above object, the present invention provides an energy ray-curable inkjet ink composition according to claim 1.

Since the ink composition of the present invention contains the specific amounts of the monofunctional monomer having a small number of reaction sites and the reactive oligomers (A) and (B) having a high rate of elongation, and further one of the reactive oligomers (A) and (B) has one or two ethylenic double bonds while the other has two or more ethylenic double bonds, the ink composition can form a printed film which suffers less cracking or peeling, and also the printed film has improved solvent resistance. In addition, the polymerizable compounds are used in combination with at least one polymerization initiator selected from the group consisting of (C) an acylphosphine oxide initiator and (D) an α-aminoalkylphenone initiator. Thus, a printed film having good curability and adherence is formed by irradiation of a low energy. Although the use of the reactive oligomer (B) having a high molecular weight tends to increase the viscosity of the ink composition, the ink composition of the present invention has a low viscosity suitable for an ink jet printing system, since the ink composition contains the specified amounts of the monofunctional monomer and the reactive oligomer (A) having a low molecular weight and one of the reactive oligomers has one or two ethylenic double bonds. Furthermore, the ink composition of the present invention contains the specified amounts of the reactive oligomers (A) and (B) and also the surface tension modifier, it has a surface tension suitable for an inkjet printing system.

Preferably, the combination of the reactive oligomers (A) and (B) is a combination selected from the following combinations (i), (ii) and (iii):

(i) Reactive oligomer (A): a reactive monofunctional oligomer having one ethylenic double bond in a molecule and Reactive oligomer (B): a reactive polyfunctional oligomer having two or more ethylenic double bonds in a molecule;
(ii) Reactive oligomer (A): a reactive polyfunctional oligomer having two ore more ethylenic double bonds in a molecule and Reactive oligomer (B): a reactive monofunctional oligomer having one ethylenic double bond in a molecule;
(iii) Reactive oligomer (A): a reactive polyfunctional oligomer having two or more ethylenic double bonds in a molecule and Reactive oligomer (B): a reactive polyfunctional oligomer having two ethylenic double bonds in a molecule.

The photopolymerization initiator preferably comprises the α-aminoalkylphenone initiator (D) and a thioxanthone initiator (E). When the α-aminoalkylphenone initiator (D) and the thioxanthone initiator (E) are used in combination, a printed film having a further improved curability can be formed.

The surface tension modifier preferably comprises a silicone compound having a polydimethylsiloxane structure, more preferably a silicone compound having an ethylenic double bond in a molecule. The silicone compound has a high effect for lowering surface tension and a reactivity, it can increase curability and adherence.

The ink composition of the present invention may optionally contain a polyfunctional monomer having two or more ethylenic double bonds in an amount of 5% by weight or less. When the ink composition contains a small amount of the polyfunctional monomer having many reaction sites, an ink composition having further improved curability and adherence is obtained without decreasing the stretchability.

The ink composition of the present invention may further contain a hindered amine compound having a 2,2,6,6-tetramethylpiperidinyl group as an antigelling agent. In the ink composition of the present invention, polymerization is easily initiated by heat or light during storage, and for this reason, storage stability is easily reduced. But, when the hindered-amine compound is used, an ink composition excellent in curability and adherence can be obtained while maintaining storage stability.

As described above, the present invention provides an energy ray-curable inkjet ink composition which does not cause cracking and pealing on a printed film and has excellent stretchability even in an application in which a printed film together with a substrate is stretched after printing of a marking film and a three-dimensional steric display member, at the same time, which has good solvent resistance and is excellent in curability and adherence even when a low energy irradiation means is used, and which is excellent in the continuous discharge property upon printing by an inkjet printing system.

The energy ray-curable inkjet ink composition of the present invention contains a monofunctional monomer having one ethylenic double bond in a molecule in an amount of 40% by weight to 75% by weight based on the whole weight of the ink composition. Since the ink composition of the present invention contains the monofunctional monomer having one ethylenic double bond in a molecule, the viscosity of the ink composition can be reduced, and it is possible to sufficiently elicit the performances of the reactive oligomers (A) and (B) having a high rate of elongation since the monofunctional monomer has less reactive sites which react with other polymerizable compounds during polymerization. Although a polyfunctional monomer having two or more ethylenic double bonds in a molecule has good reactivity, if the polyfunctional monomer is used as a sole monomer, the polymerization of the monomer with the reactive oligomers (A) and (B) proceeds so that the printed film has excessively high hardness and does not have high stretchability required for a marking film. Furthermore, since the polyfunctional monomer has high viscosity, the discharge property of the ink composition tends to decrease. When the content of the monofunctional monomer is less than 40% by weight, the ink composition containing a larger amount of the reactive oligomers (A) and (B) for imparting high stretchability to the printed film has increased viscosity, so that it is difficult to control the viscosity of the ink composition to 70 mPa·s or lower, which is suitable for an inkjet printing system. When the content of the monofunctional monomer exceeds 70% by weight, the reactivity decreases so that the curability and adherence deteriorate.

Examples of the monofunctional monomer used in the present invention include amyl (meth)acrylate, isoamyl (meth)acrylate, octyl (meth)acrylate, isooctyl (meth)acrylate, decyl (meth)acrylate, isodecyl (meth)acrylate, lauryl (meth)acrylate, isomysistyl (meth)acrylate, 2-ethylhexyl (meth)acrylate, tridecyl (meth)acrylate, 2-ethylhexyl-diglycol (meth)acrylate, 2-(meth)acryloyloxyethyl hexahydrophthalic acid, neopentyl glycol (meth)acrylate-benzoate, butoxyethyl (meth)acrylate, ethoxy-diethylene glycol (meth)acrylate, methoxy-triethylene glycol (meth)acrylate, methoxy-polyethylene glycol (meth)acrylate, methoxy-dipropylene glycol (meth)acrylate, phenoxyethyl (meth)acrylate, phenoxy-polyethylene glycol (meth)acrylate, nonylphenyl ethylene oxide adduct (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxybutyl (meth)acrylate, 2-hydroxy-3-phenoxypropyl (meth)acrylate, 2-(meth)acryloyloxyethyl-succinic acid, 2-(meth)acryloyloxyethyl-phthalic acid, 2-(meth)acryloyloxyethyl-2-hydroxyethyl-phthalic acid, etc. These monomers may be used alone or as a mixture of two or more of them. The monomers may be substituted by a functional group such as phosphorus, fluorine, etc. Among them, isooctyl (meth)acrylate and phenoxyethyl (meth)acrylate are particularly preferable since they have low viscosity.

The ink composition of the present invention contains (A) a reactive oligomer having a rate of elongation of 130 % or more at 25°C when the oligomer alone is polymerized and a weight average molecular weight of not less than 800 and less than 3,000, and (B) a reactive oligomer having a rate of elongation of 130 % or more at 25°C when the oligomer alone is polymerized and a weight average molecular weight of not less than 3,000 and not more than 8,000. When the reactive oligomers (A) and (B) having a high rate of elongation are used in the specified amounts, respectively, the cracking and peeling of the printed film are suppressed in the application in which the printed film is stretched 130% or more together with a substrate after curing, and the ink composition has good solvent resistance. When the polymer of the oligomer alone has a rate of elongation of less than 130%, a printed film having sufficient stretchability cannot be formed so that the printed film tends to be cracked or peeled when it is stretched after curing, even if the ink composition contains a monofunctional monomer having a small number of reaction sites. An oligomer having a larger rate of elongation is more preferable, but it is difficult to produce the reactive oligomers (A) and (B) having weight average molecular weights in the above-specified ranges. Thus, the rate of elongation is preferably 200% or less.

The weight average molecular weight and the rate of elongation of the reactive oligomers used according to the present invention are measured by the methods described in the Examples below.

The weight average molecular weight, the number of double bonds contained in the reactive oligomers and the rate of elongation of the reactive oligomers compounded in the ink composition of the present invention are measured as described below.

Weight Average Molecular Weight

An ink composition is separated by centrifugation at 10,000 rpm for 4 hours to precipitate pigments and other solid contents contained in the composition. The resulting supernatant is subjected to GPC to measure a weight average molecular weight as converted to a molecular weight of polystyrene.

Number of Double Bonds

An ink composition is separated by centrifugation at 10,000 rpm for 4 hours to precipitate pigments and other solid contents contained in the composition. The resulting supernatant is subjected to molecular weight fractionation by GPC. From the fractions, Fraction A containing polymers having a weight average molecular weight of not less than 800 and less than 3,000 (as converted to a molecular weight of polystyrene) and Fraction B containing polymers having a weight average molecular weight of not less than 3,000 and not more than 8,000 (as converted to a molecular weight of polystyrene) are sampled.

The number of double bonds contained in Fraction A or B is quantitatively determined by measuring the iodine number of Fraction A or B. The iodine number is measured in accordance with the method of JIS K0070. From the iodine number $I_A$ or $I_B$ of Fraction A or B and the weight average molecular weight $M_A$ or $M_B$ of Fraction A or B, the average number of double bond $D_A$ or $D_B$ of Fraction A or B is calculated by the following equation:

$$D_A = (I_A/253.8) \times (M_A/100)$$

$$D_B = (I_B/253.8) \times (M_B/100)$$

Rate of Elongation

The viscosities of Fractions A and B obtained as described above are adjusted to 100 mPa·s by dilution or concentration. To Fraction A or B, 1-hydroxycyclohexyl phenyl ketone is added in such an amount that a weight ratio of the oligomer to the initiator is 97:3 and then a rate of elongation is measured by the method described in "Rate of Elongation of Oligomer", which is described in the Examples below.

Since the reactive oligomer (A) having a weight average molecular weight of not less than 800 and less than 3,000 has a low viscosity, the use of the reactive oligomer (A) in a specific amount improves the curability while suppressing the increase of the viscosity of the ink composition. If only an oligomer having a weight average molecular weight of less than 800 is used, the printed film is too hard and has decreased stretchability and low solvent resistance although the curability of the ink composition improves. If only an oligomer having a weight average molecular weight of 3,000 or more is used, the solvent resistance tends to decrease or the viscosity of the ink composition tends to increase. Since the reactive oligomer (B) having a weight average molecular weight of not less than 3,000 and not more than 8,000 has a large rate of elongation, the use of the reactive oligomer (B) in a specific amount increases the stretchability of the printed film. If only the reactive oligomer (A) having a weight average molecular weight of less than 3,000 is used, the stretchability tends to decrease. When the weight average molecular weight of a reactive oligomer exceeds 8,000, the curability decreases and the viscosity of the ink composition increases so that the continuous discharge property deteriorates, even if the monofunctional monomer and the lower molecular weight reactive oligomer (A) are contained in the specified amounts.

The ink composition of the present invention contains both the reactive oligomers (A) and (B) each having the rate of elongation and the weight average molecular weight as described above. In such a case, preferably, one of the reactive oligomers (A) and (B) contains one or two ethylenic double bonds in a molecule while the other has two or more ethylenic double bonds. Although an oligomer has less reactivity than a monomer, when one of the reactive oligomers (A) and (B) contains one or two ethylenic double bonds in a molecule and the other has two or more ethylenic double bonds, the reaction of the reactive oligomers (A) and (B) each other or the reaction of the reactive oligomers with the monofunctional monomer smoothly proceeds. Thus, the ink composition has good curability even by low energy irradiation, and the solvent resistance of the printed film increases. Since the ink composition of the present invention contains the monofunctional monomer having the small number of reaction sites to decrease the viscosity of the composition, if only an oligomer having a single ethylenic double bond, that is, a monofunctional oligomer is used, the reactivity deteriorates so that the curability and adherence tend to decrease in the case of low energy irradiation. On the other hand, if only an oligomer having three or more ethylenic double bonds, that is, a higher functional oligomer is used, the reactivity increases and thus a crosslinking density increases so that the solvent resistance improves, but the printed film is too hard and its stretchability decreases, and also the continuous discharge property deteriorates due to the increase of the viscosity of the ink composition.

From the viewpoint of the number of ethylenic double bonds, the preferred combinations of the reactive oligomers (A) and (B) are the following combinations (i), (ii) and (iii):

(i) Reactive oligomer (A): a reactive monofunctional oligomer having one ethylenic double bond in a molecule and Reactive oligomer (B): a reactive polyfunctional oligomer having two or more ethylenic double bonds in a molecule;
(ii) Reactive oligomer (A): a reactive polyfunctional oligomer having two ore more ethylenic double bonds in a molecule and Reactive oligomer (B): a reactive monofunctional oligomer having one ethylenic double bond in a molecule;
(iii) Reactive oligomer (A): a reactive polyfunctional oligomer having two or more ethylenic double bonds in a molecule and Reactive oligomer (B): a reactive polyfunctional oligomer having two ethylenic double bonds in a molecule.

When the combination of the reactive oligomers (A) and (B) is either one of the combinations (i), (ii) and (iii), the ink composition maintains sufficient curability by low energy irradiation and the characteristics of the reactive oligomers having the high rate of elongation are not impaired, since one of the reactive oligomers (A) and (B) has a higher content of the ethylenic double bonds while the other has a lower content of the ethylenic double bonds. From the viewpoint of the balance of the curability, adherence, solvent resistance and viscosity, the combination (ii) or (iii) is preferable, the combination (iii) is more preferable, and the combination of the reactive difunctional oligomers each having two ethylenic double bonds are particularly preferable. In the case of the combinations (i), (ii) and (iii), the reactivity of the reactive polyfunctional oligomer having two or more ethylenic double bonds in a molecule incases as the number of the ethylenic double bonds thereof increases. But, the increase of the functional groups increases the viscosity of the oligomer and the printed film is hard. Therefore, the number of the ethylenic double bonds of such an oligomer is preferably 4 or less, more preferably 3 or less. Herein, a reactive monofunctional oligomer, a reactive difunctional oligomer, and a reactive higher functional oligomer mean an oligomer having one ethylenic double bond, an oligomer having two ethylenic double bonds in a molecule, and an oligomer having three or more ethylenic double bonds in a molecule, respectively. A reactive polyfunctional polymer means an oligomer having two or more ethylenic double bonds in a molecule and collectively indicates a reactive difunctional oligomer and a reactive higher functional oligomer.

The ink composition of the present invention contains the reactive oligomer (A) in an amount of 5% by weight to 35% by weight and the reactive oligomer (B) in an amount of 5% by weight to 35% by weight, provided that the total content of the reactive oligomers (A) and (B) is 10% by weight to 40% by weight, each based on the whole weight of the ink composition. When the amount of either the reactive oligomer (A) or the reactive oligomer (B) is less than 5% by weight, the curability of the ink composition decreases. When the amount of either the reactive oligomer (A) or the reactive oligomer (B) exceeds 35% by weight, the balance of the polymerizable compounds is disrupted so that the viscosity of the ink composition increases and also the curability decreases. When the total amount of the reactive oligomers (A) and (B) is less than 10% by weight, the curability and adherence deteriorate. When the total amount of the reactive oligomers (A) and (B) exceeds 40% by weight, the amount of the monofunctional monomer to be contained in the ink composition decreases so that the viscosity of the ink composition tends to increase if the low molecular weight reactive oligomer is used, and the curability tends to deteriorate.

The reactive oligomers (A) and (B) are preferably aliphatic oligomers. The aliphatic oligomer is more largely stretched than an aromatic oligomer due to its molecular structure so that it allows the formation of the printed film having better stretchability.

Specific examples of the reactive oligomers (A) and (B) include a urethane acrylate oligomer, a polyester acrylate oligomer and an epoxy acrylate oligomer. Examples of the commercially available reactive oligomer (A) include EBECRYL® 3708, EBECRYL® 210, EBECRYL® 270, EBECRYL® 284, EBECRYL® 264, EBECRYL® 265, EBECRYL® 8402, EBECRYL® 8804, EBECRYL® 8807, EBECRYL® 3708, EBECRYL® 745, KRM® 8098, KRM® 7735 and KRM® 8296 manufactured by DAICEL-CYTEC Company Ltd., and CN 131B and CN 929 manufactured by Sartomer. Examples of the commercially available reactive oligomer (B) include EBECRYL® 230 manufactured by DAICEL-CYTEC Company Ltd., CN 966J75, CN 964 and CN 980 manufactured by Sartomer, KAYARAD® UX-2201, KAYARAD® UX-2301, KAYARAD® UX-3204, KAYARAD® UX-3301, KAYARAD® UX-4101, KAYARAD® UX-6101, KAYARAD® UX-7101 and KAYARAD® UX-0937 manufactured by Nippon Kayaku Co., Ltd., and Actilane® 170, Actilane® 200, Actilane® 300 and Actilane® 310 manufactured by Akros. These may be used alone or as a mixture of two or more of them.

The ink composition of the present invention may further contain a polyfunctional monomer having two or more ethylenic double bonds as long as the composition contains the monofunctional monomer and the reactive oligomers (A) and (B) in the above-specified amounts. When the ink composition contains a small amount of the polyfunctional monomer having a large number of reaction sites, the ink composition having good curability and adherence can be obtained without decreasing the stretchability. If the polyfunctional monomer is used, its amount is preferably 5% or less, since the addition of the polyfunctional monomer makes the printed film harder and decreases the stretchability.

Specific examples of the polyfunctional monomer include difunctional monomers having two ethylenic double bonds in a molecule such as hydroxypivalic acid neopentyl glycol di(meth)acrylate, polytetramethylene glycol di(meth)acrylate, trimethylolpropane (meth)acrylic acid benzoic acid ester, diethylene glycol di(meth)acrylate, triethylene glycol di(meth)acrylate, tetraethylene glycol di(meth)acrylate, polyethylene glycol (200) di(meth)acrylate, polyethylene glycol (400) di(meth)acrylate, polyethylene glycol (600) di(meth)acrylate, polyethylene glycol (1000) di(meth)acrylate, dipropylene glycol di(meth)acrylate, tripropylene glycol di(meth)acrylate, polypropylene glycol (400) di(meth)acrylate, polypropylene glycol (700) di(meth)acrylate, neopentyl glycol di(meth)acrylate, 1,3-butanediol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A ethylene oxide adduct di(meth)acrylate and bisphenol A propylene oxide adduct di(meth)acrylate, etc.; trifunctional monomers having three ethylenic double bonds in a molecule such as trimethylolpropane tri(meth)acrylate, pentaerythritol tri(meth)acrylate, tris(2-hydroxyethyl)isocyanurate tri(meth)acrylate, glyceryl tri(meth)acrylate and their ethylene oxide adducts, propylene oxide adducts and caprolactone adducts; tetrafunctional monomers having four ethylenic double bonds such as ditrimethylolpropane tetra(meth)acrylate, pentaerythritol tetra(meth)acrylate and their ethylene oxide adducts, propylene oxide adducts and caprolactone adducts; pentafunctional monomers having five ethylenic double bonds such as dipentaerythritol hydroxypenta(meth)acrylate and its ethylene oxide adducts, propylene oxide adducts and caprolactone adducts; and hexafunctional monomers having six ethylenic double bonds such as dipentaerythritol hexa(meth)acrylate and ethylene oxide adducts, propylene oxide adducts and caprolactone adducts. These may be used alone or as a mixture of two or more of them.

The ink composition of the present invention contains at least one photopolymerization initiator selected from the group consisting of an acylphosphine oxide initiator (C) and an α-aminoalkylphenone initiator (D) in order to initiate polymerization by a low energy irradiating means. By the use of such a photopolymerization initiator, the curability and adherence of a polymerizable compound containing the monofunctional monomer and the reactive oligomers (A) and (B) can be improved. When the α-aminoalkylphenone initiator (D) is used, preferably, it is used in combination with a thioxanthone initiator (E). The mixed initiator of the α-aminoalkylphenone initiator (D) and the thioxanthone initiator (E) can further increase the curability and adherence.

Specific examples of the acylphosphine oxide initiator (C) include 2,4,6-trimethylbenzoyldiphenylphosphine oxide, 2,6-dimethoxybenzoyldiphenylphosphine oxide, 2,6-dichlorobenzoyldiphenylphosphine oxide, 2,3,5,6-tetramethylbenzoyldiphenylphosphine oxide, 2,6-dimethylbenzoyldiphenylphosphine oxide, 4-methylbenzoyldiphenylphosphine oxide, 4-ethylbenzoyldiphenylphosphine oxide, 4-isopropylbenzoyldiphenylphosphine oxide, 1-methylcyclohexanoylbenzoyldiphenylphosphine oxide, bis(2,4,6-trimethylbenzoyl)-phenylphosphine oxide, 2,4,6-trimethylbenzoylphenylphosphinic acid methyl ester, 2,4,6-trimethylbenzoylphenylphosphinic acid isopropyl ester and bis(2,6-dimethoxybenzoyl)-2,4,4-trimethylpentylphosphine oxide. These may be used alone or as a mixture of two or more of them. Examples of the commercially available acylphosphine oxide initiator include DAROCURE® TPO manufactured by Ciba.

Specific examples of the α-aminoalkylphenone initiator (D) include 2-methyl-1(4-methylthiophenyl)phenyl]-2-morpholinopropane-1-one and 2-benzyl-2-dimethylamino-1-(4-morpholinophenyl)butanone-1,2-methyl-1-[4-(methoxythio)-phenyl]-2-morpholinopropane-2-one. These may be used alone or as a mixture of two or more of them. Examples of the commercially available α-aminoalkylphenone initiator include IRGACURE® 369 and IRGACURE® 907 manufactured by Ciba.

Specific examples of the thioxanthone initiator (E) include thioxanthone, 2-methylthioxanthone, 2-ethylthioxanthone, 2-isopropylthioxanthone, 4-isopropylthioxanthone, 2-chlorothioxanthone, 2,4'-dimethylthioxanthone, 2,4-diethylthioxanthone, 2,4-dichlorothioxanthone and 1-chloro-4-propoxythioxanthone. These may be used alone or as a mixture of two or more of them. Examples of the commercially available thioxanthone initiator (E) include KAYACURE® DETX-S® manufactured by Nippon Kayaku Co., Ltd. and CHIVACURE® ITX-S manufactured by Double Bond Chemical.

The content of the acylphosphine oxide initiator (C), the α-aminoalkylphenone initiator (D) and the thioxanthone initiator (E) in the ink composition is usually from 5% by weight to 15% by weight in terms of a total amount thereof, based on the whole composition, depending on the content of the polymerizable compounds. When their content is less than 5% by weight, the curability and adherence are easily decreased by low energy irradiation. On the other hand, when their content exceeds 15% by weight, unreacted components remain, and printing quality is easily deteriorated. Preferably, 40 to 99% by weight of the α-aminoalkylphenone initiator (D), and 1 to 60% by weight of the thioxanthone initiator (E) are contained in the whole photopolymerization initiators. When the photopolymerization initiator containing the α-aminoalkylphenone initiator (D) and the thioxanthone initiator (E) within the above range is used, an ink composition further excellent in curability and adherence can be obtained.

As the photopolymerization initiator, besides the above initiators, a conventionally used initiator may further be contained. Examples of the photopolymerization initiator include an aryl alkyl ketone initiator, an oxime ketone initiator, an acyl phosphonate initiator, an S-phenyl thiobenzoate initiator, a titanocene initiator, an aromatic ketone initiator, a benzyl initiator, a quinone derivative initiator, and a ketocoumarin initiator. However, since as the content of these initiators increases, the reactivity decreases, it is preferred that the content of the additional initiator is 0.5 to 5% by weight in total based on the whole weight of the ink composition.

The ink composition of the present invention contains a surface tension modifier. Examples of the suitable surface tension modifier include a silicone compound having a polydimethylsiloxane structure. When the silicone compound is used as a surface tension modifier, liquid physical properties such as surface tension of the ink composition can be adjusted within a range suitable for an inkjet printing system. Among the silicone compounds, a silicone compound having one or more ethylenic double bonds in a molecule is preferable. When the silicone compound having one or more ethylenic double bonds in a molecule is used together with the polymerizable compounds, the adherence is further increased.

Specific examples of the silicone compound include BYK®-300, BYK®-302, BYK®-306, BYK®-307, BYK®-310, BYK®-315, BYK®-320, BYK®-322, BYK®-323, BYK®-325, BYK®-330, BYK®-331, BYK®-333, BYK®-337, BYK®-344, BYK®-370, BYK®-375, BYK®-377, BYK®-UV 3500, BYK®-UV 3510 and BYK®-UV 3570 manufactured by BYK-Chemie, TEGO-RAD® 2100, TEGO-RAD 2200N, TEGO-RAD® 2250, TEGO-RAD® 2300, TEGO-RAD® 2500, TEGO-RAD® 2600 and TEGO-RAD® 2700 manufactured by Degussa, and Glanol® 100, Glanol® 115, Glanol® 400, Glanol® 410, Glanol® 435, Glanol® 440, Glanol® 450, B-1484, Polyflow® ATF-2, KL®-600, UCR®-L72 and UCR®-L93 manufactured by Kyoeisha Chemical Co., Ltd. These may be used alone or as a mixture of two or more of them. Among them, BYK®-UV 3500, BYK®-UV 3510 and BYK®-UV 3570 manufactured by BYK-Chemie, TEGO-RAD® 2100, TEGO-RAD® 2200N, TEGO-RAD® 2250, TEGO-RAD® 2300, TEGO-RAD® 2500, TEGO-RAD® 2600 and TEGO-RAD® 2700 manufactured by Degussa, and UCR-L® 72 and UCR-L® 93 manufactured by Kyoeisha Chemical Co., Ltd. are preferable.

The content of the surface tension modifier in the ink composition is preferably 2.5% by weight or less, more preferably 0.02 to 2.5% by weight or less relative to the whole content. When the content of the surface tension modifier exceeds 2.5% by weight, undissolved materials may be generated, and foaming may be caused in some cases.

The ink composition may contain a conventional surface tension modifier besides the aforementioned silicone compound. Specific examples of the surface tension modifier include Emulgen manufactured by Kao Corporation.

In the present invention, the ink composition may use conventionally known various dyes as colorants and, from a viewpoint of weatherability, it is preferable to used either or both of an inorganic pigment and an organic pigment.

Specific examples of the inorganic pigment include titanium oxide, zinc flower, zinc oxide, lithopone, iron oxide, aluminum oxide, silicon dioxide, kaolinite, montmorillonite, talc, barium sulfate, calcium carbonate, silica, alumina, Cadmium Red, colcothar, Molybdenum Red, Chrome vermillion, Molybdate Orange, chrome yellow, Chrome Yellow, Cadmium Yellow, yellow iron oxide, Titanium Yellow, chromium oxide, viridian, Cobalt Green, Titanium Cobalt Green, Cobalt Chrome Green, ultramarine, Ultramarine Blue, Prussian Blue, Cobalt Blue, Cerulean Blue, Manganese Violet, Cobalt Violet and mica.

Specific examples of the organic pigment include azo, azomethine, polyazo, phthalocyanine, quinacridone, anthraquinone, indigo, thioindigo, quinophthalone, benzimidazolone and isoindoline organic pigments. Alternatively, carbon black consisting of acidic, neutral or basic carbon may be used. Furthermore, a hollow particle of a crosslinked acrylic resin may be used as an organic pigment.

Specific examples of the pigment having a cyan color include C.I. Pigment Blue 1, C.I. Pigment Blue 2, C.I. Pigment Blue 3, C.I. Pigment Blue 15:3, C.I. Pigment Blue 15:4, C.I. Pigment Blue 16, C.I. Pigment Blue 22 and C.I. Pigment Blue 60. Among them, from the viewpoint of weatherability and coloring power, either or both of C.I. Pigment Blue 15:3 and C.I. Pigment Blue 15:4 are preferable.

Specific examples of the pigment having a magenta color include C.I. Pigment Red 5, C.I. Pigment Red 7, C.I. Pigment Red 12, C.I. Pigment Red 48 (Ca), C.I. Pigment Red 48 (Mn), C.I. Pigment Red 57 (Ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, C.I. Pigment Red 209, C.I. Pigment Red 254 and C.I, Pigment Violet 19. Among them, from the viewpoint of weatherability and coloring power, at least one pigment selected from the group consisting of C.I. Pigment Red 122, C.I. Pigment Red 202, C.I. Pigment Red 209, C.I. Pigment Red 254 and C.I. Pigment Violet 19 is preferable.

Specific examples of the pigment having a yellow color include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 120, C.I. Pigment Yellow 128, C.I. Pigment Yellow 129, C.I. Pigment Yellow 130, C.I. Pigment Yellow 138, C.I. Pigment Yellow 139, C.I. Pigment Yellow 147, C.I. Pigment Yellow 150, C.I. Pigment Yellow 151, C.I. Pigment Yellow 154, C.I. Pigment Yellow 155, C.I. Pigment Yellow 180, C.I. Pigment Yellow 185, C.I. Pigment Yellow 213 and C.I. Pigment Yellow 214. Among them, from the viewpoint of weatherability, at least one pigment selected from the group consisting of C.I. Pigment Yellow 74, C.I. Pigment Yellow 83, C.I. Pigment Yellow 109, C.I. Pigment Yellow 110, C.I. Pigment Yellow 120, C.I. Pigment Yellow 128, C.I. Pigment Yellow 138, C.I. Pigment Yellow 139, C.I. Pigment Yellow 150, C.I. Pigment Yellow 151, C.I. Pigment Yellow 154, C.I. Pigment Yellow 155, C.I. Pigment Yellow 213 and C.I. Pigment Yellow214 is preferable.

Specific examples of the pigment having a black color include HCF®, MCF®, RCF®, LFF® and SCF® manufactured by Mitsubishi Chemical Corporation; Monarch® and Regal manufactured by Cabot; Color Black, Special Black and Printex manufactured by Degussa-Huels; Toka® Black manufactured by Tokai Carbon Co., Ltd.; and Raven® manufacture by Columbia. Among them, at least one pigment selected from the group consisting of HCF® #2650, HCF® #2600, HCF® #2350, HCF® #2300, MCF® #1000, MCF® #980, MCF® #970, MCF® #960, MCF® 88, LFFMA® 7, MA® 8, MA® 11, MA® 77 and MA® 100 manufactured by Mitsubishi Chemical Corporation and Printex® 95, Printex® 85, Printex® 75, Printex® 55 and Printex® 45 manufactured by Degussa Huels is preferable.

The content of the colorant in the ink composition is preferably 1 to 10% by weight, more preferably 2 to 7% by weight, most preferably 3 to 6% by weight, based on the while weight of the composition. When the content of the colorant is too small, an image coloring power decreases. On the other hand, when the content of the colorant is too large, the viscosity of the ink composition increases and the flowability easily deteriorates.

When a pigment is used as the colorant, a pigment derivative and a pigment dispersant may be further used in order to improve the dispersibility of the pigment. Specific examples of the pigment derivative include a pigment derivative having a dialkylaminoalkyl group, and a pigment derivative having a dialkylaminoalkylsulfonic acid amide group. Specific examples of the pigment dispersant include ionic or nonionic surfactants and anionic, cationic or nonionic polymer compounds. Among them, from the viewpoint of dispersion stability, a polymer compound containing a cationic group or an anionic group is preferable. Examples of the commercially available pigment dispersant include SOLSPERSE® manufactured by Lubrizol Corporation, DISPERBYK® manufactured by BYK-Chemie and EFKA® manufactured by EFKA Additives. The contents of the pigment derivative and the pigment dispersant in the ink composition are preferably 0.05 to 5% by weight, respectively, based on the while weight of the composition.

Preferably, the ink composition of the present invention further contains a hindered amine compound having a 2,2,6,6-tetramethylpiperidinyl group. When the hindered amine compound is contained together with the monofunctional monomer and the reactive oligomers (A) and (B) and the photopolymerization initiator, an ink composition excellent in storage stability can be obtained without decreasing the curability of the ink composition. Specific examples of the hindered amino compound include bis(1-oxyl-2,2,6,6-tetramethylpiperidin-4-yl) sebacate, bis(2,2,6,6-tetramethyl-1-(octyloxy)-4-piperidinyl) decanedioate. These may be used alone or as a mixture of two or more of them. Among them, bis(1-oxyl-2,2,6,6-tetramethylpiperidin-4-yl) sebacate is preferable. Examples of the commercially available hindered amine compound (F) include IRGASTAB® UV-10 and TINUVIN® 123 manufactured by Ciba.

The content of the hindered amine compound in the ink composition is preferably 0.01 to 3% by weight, more preferably 0.2 to 2% by weight, based on the whole weight of the composition. When the content of the hindered amine compound is less than 0.01% by weight, a radical generated during storage cannot be sufficiently captured, and the storage stability tends to deteriorate. On the other hand, when the content of the hindered amino compound (F) is more than 3% by weight, the effect of capturing radicals is saturated and, at the same time, a polymerization reaction upon the irradiation of the energy ray tend to be inhibited.

The ink composition may further contain, as an antigelling agent, other hindered amine compounds, phenol antioxidants, phosphorus antioxidants and hydroquinone monoalkyl ethers. Specific examples of the antigelling agent include hydroquinone monomethyl ether, hydroquinone, t-butylcatechol, pyrogallol and TINUVIN® 111 FDL, TINUVIN® 144, TINUVIN® 292, TINUVIN® XP40, TINUVIN® XP60 and TINUVIN® 400 manufactured by Ciba. The total content of these antigelling agents in the ink composition is preferably 0.1 to 4% by weight based on the while weight of the composition.

The ink composition of the present invention may further contain, as an optional component, general additives such as a surfactant, a leveling agent, an anti-foaming agent, an antioxidant, a pH regulator, a charge imparting agent, a bactericidal agent, an antiseptic agent, a deodorant, a charge conditioner, a wetting agent, an anti-skinning agent and a perfume, if necessary.

As a method of preparing the ink composition, conventional preparation methods can be used, but when a pigment is used as a colorant, the following preparation method is preferable.

Firstly, a mixture obtained by pre-mixing a colorant, and a part of the monofunctional monomer and the reactive oligomers (A) and (B) which are polymerizable compounds and, if necessary, a pigment dispersant is prepared, and the mixture is dispersed by a disperser to prepare a primary dispersion. Specific examples of the disperser include a disper; container driving medium mills such as a ball mill, a centrifugation mill, and a planetary ball mill; high speed rotating mills such as a sand mill; and medium stirring mills such as a stirring tank-type mill.

Then, the remaining polymerizable compound, the photopolymerization initiator, the surface tension modifier and, if necessary, other additives such as the hindered amine compound are added to the primary dispersion, and the materials are uniformly mixed using a stirrer. Specific examples of the stirrer include a three-one motor, a magnetic stirrer, a disper and a homogenizer. Alternatively, the ink composition may be mixed using a mixing machine such as a line mixer. For the purpose of further finely-dividing particles in the ink composition, the ink composition may be mixed using a disperser such as a bead mill or a high pressure jet mill.

When a pigment is used as the colorant, the dispersed average particle size of pigment particles in the ink composition is preferably 20 to 200 nm, more preferably 50 to 160 nm. When the dispersed average particle size is less than 20 nm, the weatherability of a printed material tend to decrease since the particles are small. On the other hand, when the dispersed average particle size exceeds 200 nm, the fineness of a printed material tends to deteriorate.

According to the present invention, since the monofunctional monomer and the reactive oligomers (A) and (B) having a high rate of elongation are contained in the specified amounts, respectively, the ink composition having a low viscosity of 4 to 70 mPa·s at 25°C can be prepared. In addition, since the polymerizable compounds and the surface tension modifier are contained, an ink composition suitable for an inkjet printing system having a surface tension of 25 to 32 mN/m can be prepared. Therefore, in the ink composition of the present invention, phenomena such as nozzle failures hardly occur, and the continuous discharge property is excellent.

The ink composition of the present invention does not necessarily contain a diluting solvent. However, when commercially available materials are used as the components to be contained in the ink composition, a diluting solvent may be inevitably immixed in the ink composition. The amount of the inevitably immixed diluting solvent may be usually 3% by weight or less based on the whole weight of the ink composition. It is not necessary to dilute the ink composition of the present invention with a diluting solvent, and the ink composition of the present invention has a low viscosity even when the composition is not warmed, and further, is good in pigment dispersibility when the colorant is pigment, and has such good dispersion stability that disadvantages such as an increase in viscosity during storage and during use, and sedimentation of a pigment are not caused. For this reason, in an inkjet printing system, stable discharge is achieved at room temperature without warming an ink.

When a marking film such as a car wrapping film is manufactured, the marking film can be manufactured, for example by printing an ink composition in a predetermined pattern on one surface of a substrate including a polymer resin such as a vinyl chloride resin, polyethylene terephthalate, and polycarbonate by an inkjet printing system, and laminating an adhesive layer and a releasing sheet on the other surface of the substrate. In addition, when a three-dimensional steric display member which sterically molds a printed material is manufactured, similarly, the three-dimensional steric display member can be manufactured, for example, by printing an ink composition in a predetermined pattern on one surface of a polymer substrate by an inkjet printing system, and sterically molding the printed material into a desired shape.

The inkjet printing system is not particularly limited, and examples thereof include a charge controlling system of discharging an ink utilizing an electrostatic attraction force, a drop on demand system (pressure pulse system) utilizing a vibration pressure of a piezo element, an acoustic inkjet printing system utilizing radiation pressure for converting an electric signal into an acoustic beam and irradiating an ink with the beam, and a thermal inkjet printing system of heating an ink to form babbles and utilizing the generated pressure. In addition, the inkjet printing system includes a system of injecting an ink of a low concentration called photoink in a fine volume and in a large number, a system of improving image quality using a plurality of inks having substantially the same hue and different concentrations, and a system using a colorless transparent ink.

In the present invention, as irradiation means, in addition to a mercury lamp and a metal halide lamp, ultraviolet ray LED and ultraviolet ray laser can be used. Particularly, since the ultraviolet ray LED and the ultraviolet ray laser are low energies, and the ink composition requires a high curing sensitivity, the aforementioned ink composition is effective. For example, in the case of the ink composition of the present invention, a low energy of 500 mJ/cm$^2$ or less can also be utilized as an integral light quantity of an ultraviolet ray. It is preferable that the ink composition is irradiated with an energy ray until 1 to 1,000 ms passes after the ink composition is discharged onto a recording medium. When the elapsed time is shorter than 1 ms, the distance between a head and a light source is too short, and the head is irradiated with an energy ray, leading to an unforeseen situation. On the other hand, when the elapsed time exceeds 1,000 ms, the image quality tends to deteriorate due to ink blur in the case of polychrome printing.

The present invention will be explained more in detail by making reference to the Examples. The present invention is not limited to those Examples. Hereinafter, "part" means "part by weight".

EXAMPLES

Components of ink compositions used in the respective Examples and Comparative Examples are shown in following Table 1. The indication of the ink compositions of Tables 2 to 5 shows the same composition as that of the indication in parentheses in the column of "Kinds" in Table 1. For example, "MA-8" in Tables 2 to 5 indicates "Carbon black pigment (MA-8)" in Table 1. The rate of elongation of the oligomer alone and the weight average molecular weight of the oligomer were measured as follows.

Rate of Elongation of Oligomer

An oligomer, 1-hydroxycyclohexyl phenyl ketone as a polymerization initiator (weight ratio of oligomer to initiator = 97:3) and methyl ethyl ketone as a diluting solvent are mixed to prepare a solution having a viscosity of 100 mPa•s at 25°C. The solution is coated on a glass plate using a bar coater so that a film thickness after drying is 50 to 100 $\mu$m to from a uniform coating film. Then, the glass plate is dried in a chamber kept at 60°C for 5 minutes and irradiated with UV ray from a metal halide lamp (cumulative amount of light: 1,000 mJ/cm$^2$) to form a polymer. The resulting polymer is peeled off from the glass plate and cut to a size of 50 mm long and 10 mm wide to obtain a measurement sample. Using a tensile tester (Autograph$^®$ AGS-H 100N manufactured by Shimadzu Corporation), the elongation at break of the measurement sample is measured at a tension rate of 1 mm/sec, and used as a rate of elongation of the polymer of the oligomer alone.

Weight Average Molecular Weight of Oligomer

The weight average molecular weight (as converted to a molecular weight of polystyrene) of an oligomer alone is measured by gel permeation chromatography (GPC) (solvent: tetrahydrofuran).

Table 1

| Components | Kinds | Trade Names and Specifications |
|---|---|---|
| Colorant | Carbon black pigment (MA-8) | MA-8, manufactured by Mitsubishi Chemical Corporation |
| | Nickel azo pigment (LA-2) | LA-2, manufactured by Ciba |
| | Quinacridone pigment (RT 343D) | CINQUASIA$^®$ Magenta RT-343-D, manufactured by Ciba |
| | Copper phthalocyanine pigment (P-BFS) | HOSTAPERM$^®$ BLUE P-BFS, manufactured by Clariant |
| Pigment dispersant | Comb copolymer having basic functional group (SOLSPERSE$^®$ 33000) | SOLSPERSE$^®$ 33000, manufactured by the Lubrizol Corporation |
| Polymerizable compound: | | |
| Monomer | Isooctyl acrylate (IO-A) | Sartomer$^®$ SR440 (ethylenic double bond /molecule: 1, manufactured by Sartomer |
| | Phenoxyethylene glycol acrylate (PO-A) | NK ESTER AMP-10G (Tg: -22°C, ethylenic double bond/molecule: 1), manufactured by Shin-Nakamura Chemical Co., Ltd. |
| | Tetraethylene glycol diacrylate (TEGDA) | Sartomer$^®$ SR268 (ethylenic double bond/molecule: 2), manufactured by Sartomer |
| | Ethoxylated trimethylolpropane triacrylate (EOMMPTA$^®$) | Sartomer$^®$ SR454 (ethylenic double bond/molecule: 3), manufactured by Sartomer |
| Oligomer (A) | Aromatic monofunctional oligomer (CN 1318) | Sartomer$^®$ CN 131B (MW: 1000, ethylenic double bond/molecule: 1, rate of elongation: 160%). manufactured by Sartomer |
| | Aromatic difunctional urethane acrylic oligomer (EBECRYL$^®$ 210) | EBECRYL$^®$ 210 (MW: 1500, ethylenic double bond/molecule: 2, rate of elongation: 160%), manufactured by DAICEL-CYTEC Company LTD. |
| | Aliphatic difunctional urethane acrylic oligomer (EBECRYL$^®$ 284) | EBECRYL$^®$ 284 (MW: 1200, ethylenic double bond/molecule: 2, rate of elongation: 160%), manufactured by DAICEL-CYTEC Company LTD. |
| | Aliphatic trifunctional urethane acrylic oligomer (CN929) | Sartomer$^®$ CN929 (MW: 2500, ethylenic double bond/molecule: 3, rate of elongation; 130%), manufactured by Sasrtomer |

(continued)

| Components | Kinds | Trade Names and Specifications |
|---|---|---|
| Oligomer (B) | Aliphatic urethane acrylate oligomer (ACTILANE® 360) | ACTILANE® 300 (MW: 6000, ethylenic double bond/molecule: 1.5 (equal amount mixture of oligomer having one double bond and oligomer having two double bonds), rate of elongation; 200%), manufactured by Akros |
| | Aliphatic difunctional urethane acrylate oligomer (KAYARAD® UX-0937) | KAYARAD® UX-0937 (MW: 4000, ethylenic double bond/molecule: 2, rate of elongation; 200%), manufactured by NIPPON KAYAKU |
| | Aliphatic difunctional urethane acrylate oligomer (EBECRYL® 230) | EBECRYL® 230 (MW: 5000, ethylenic double bond/molecule: 2, rate of elongation; 190%), manufactured by DAICEL-CYTEC Company Ltd. |
| | Aliphatic difunctional urethane acrylate oligomer (KAYARAD® UX-4101) | KAYARAD® UX-4101 (MW: 7200, ethylenic double bond/molecule: 2, rate of elongation; 200%), manufactured by NIPPON KAYAKU |
| | Aliphatic difunctional urethane acrylate oligomer (CN® 966J75) | CN® 966J75 (MW: 6500, ethylenic double bond/molecule: 2, rate of elongation; 130%), manufactured by Sasrtomer |
| Oligomer | Aliphatic trifunctional urethane acrylate oligomer (ACTLINANE® 251) | ACTILANE® 300 (MW: 700, ethylenic double bond/molecule: 3, rate of elongation; 105%), manufactured by Akros |
| | Aliphatic trifunctional urethane acrylate oligomer (KAYARAD® DPHA-40H) | KAYARAD® DPHA-40H (MW: 7000, ethylenic double bond/molecule: 3, rate of elongation; 101%), manufactured by NIPPON KAYAKU |
| Pohotopolymeri-zation | 2,4,6-Trimethylbenzoyl-diphenyl-phosphine oxide (DAROCURE® TPO) | DAROCURE® TPO (monoacylphosphinoxide), manufactured by Ciba |
| initiator | 2-Methyl-1-[4-(methylthio)phenyl]-2-morpholino-propane-1-one (IRGACURE® 907) | IRGACURE® 907 ($\alpha$-aminoalkylphenone), manufactured by Ciba |
| | 2-Benzyl-2-dimethylamino-1-(4-morpholinopropan-1-one (IRGACURE® 369) | IRGACURE® 369 ($\alpha$-aminoalkylphenone), manufactured by Ciba |
| | Isopropylthioxanthone (ITX-S®) | ITX-S® (thioxanthone) manufactured by Double Bond |
| Surface tension modifier | Polyether-modified polydimethylsiloxane (BYK®-UV3510) | BYK®-UV3510, manufactured by BYK-Chemie |
| Antigelling agent | Bis (1-oxyl-2, 2, 6, 6-tetramethylpiperidin-4-yl) sebacate (IRGASTAB® UV10) | IRGASTAB® UV10 (hindered amine), manufactured by Ciba |

A colorant, a pigment dispersant and a monofunctional monomer were weighed into a 100 cc plastic bottle in the compounding amounts shown in Tables 2 to 5, 100 parts of zirconia beads were added thereto, and the mixture was dispersed by a paint conditioner (manufactured by Toyo Seiki Ltd.) for 2 hours to obtain a primary dispersion. Then, the remaining components were added to the resulting primary dispersion in the compounding amounts shown in Tables 2 to 5, and the mixture was stirred with a magnetic stirrer for 30 minutes. After stirring, the mixture was suction filtered through a glass filter (manufactured by Kiriyama Glass) to prepare an ink.

Table 2

| | | | Example 1 | Example 2 | Example 3 | Example 4 | Example 5 | Example 6 |
|---|---|---|---|---|---|---|---|---|
| Colorant | MA-8 | (Parts) | 2 | -- | -- | -- | 2 | 2 |
| | LA-2 | (Parts) | -- | 2 | -- | -- | -- | -- |
| | RT343D | (Parts) | -- | -- | 2 | -- | -- | -- |
| | P-BFS® | (Parts) | -- | -- | -- | 2 | -- | -- |
| Pigment dispersant | SOLSPERSE 33000 | (Parts) | 1 | 1 | 1 | 1 | 1 | 1 |
| Monofunctional monomer | IO-A | (Parts) | 30 | 30 | 30 | 30 | 30 | 30 |
| | PO-A | (Parts) | 30 | 30 | 30 | 30 | 30 | 30 |
| | TEGDA | (Parts) | -- | -- | -- | -- | -- | -- |
| | EOTMPTA | (Parts) | -- | -- | -- | -- | -- | -- |
| Total Amount of Monofunctional Monomers | | (Parts) | 60 | 60 | 60 | 60 | 60 | 60 |
| Oligomer (A) | CN-131B | (Parts) | -- | -- | -- | -- | -- | -- |
| | EBECRYL® 210 | (Parts) | 15 | 15 | 15 | 15 | 15 | 15 |
| | EBECRYL® 284 | (Parts) | -- | -- | -- | -- | -- | -- |
| | CN 929 | (Parts) | -- | -- | -- | -- | -- | -- |
| Oligomer (B) | ACTILANE® 300 | (Parts) | -- | -- | -- | -- | -- | -- |
| | KAYARAD® UA0937 | (Parts) | -- | -- | -- | -- | -- | -- |
| | EBECRYL® 230 | (Parts) | 10 | 10 | 10 | 10 | -- | -- |
| | KAYARAD® UA4101 | (Parts) | -- | -- | -- | -- | 10 | -- |
| | CN 966J75 | (Parts) | -- | -- | -- | -- | -- | 10 |
| Oligomer | ACTILANE® 251 | (Parts) | -- | -- | -- | -- | -- | -- |
| | KAYARAD® DPHA-40H | (Parts) | -- | -- | -- | -- | -- | -- |
| Total Amount of Oligomers (A) and (B) | | (Parts) | 25 | 25 | 25 | 25 | 25 | 25 |

(continued)

| | | Example 1 | Example 2 | Example 3 | Example 4 | Example 5 | Example 6 |
|---|---|---|---|---|---|---|---|
| Photopolymerization initiator | DAROCURE® TPO | (Parts) | 11.78 | 11.78 | 11.78 | 11.78 | 11.78 | 11.78 |
| | IRGACURE® 907 | (Parts) | -- | -- | -- | -- | -- | -- |
| | IRGACURE® 369 | (Parts) | -- | -- | -- | -- | -- | -- |
| | Chivacure® ITX | (Parts) | -- | -- | -- | -- | -- | -- |
| Antigelling agent | IRGASTAB® UV10 | (Parts) | 0.2 | 0.2 | 0.2 | 0.2 | 0.2 | 0.2 |
| Surface tension modifier | BYK®-UV3510 | (Parts) | 0.02 | 0.02 | 0.02 | 0.02 | 0.02 | 0.02 |

Table 3

|  |  |  | Example 7 | Example 8 | Example 9 | Example 10 | Example 11 | Example 12 |
|---|---|---|---|---|---|---|---|---|
| Colorant | MA-8 | (Parts) | 2 | 2 | 2 | 2 | 2 | 2 |
|  | LA-2 | (Parts) | -- | -- | -- | -- | -- | -- |
|  | RT343D | (Parts) | -- | -- | -- | -- | -- | -- |
|  | P-BFS® | (Parts) | -- | -- | -- | -- | -- | -- |
| Pigment dispersant | SOLSPERSE 33000 | (Parts) | 1 | 1 | 1 | 1 | 1 | 1 |
| Monofunctional monomer | IO-A | (Parts) | 25 | 25 | 20 | 30 | 30 | 30 |
|  | PO-A | (Parts) | 20 | 20 | 20 | 20 | 30 | 30 |
|  | TEGDA | (Parts) | 5 | 5 | -- | -- | -- | -- |
|  | EOTMPTA | (Parts) | -- | -- | 5 | -- | -- | -- |
| Total Amount of Monofunctional Monomers |  | (Parts) | 45 | 45 | 40 | 50 | 60 | 60 |
| Oligomer (A) | CN-131B® | (Parts) | -- | -- | -- | 10 | -- | -- |
|  | EBECRYL® 210 | (Parts) | -- | -- | -- | -- | 15 | -- |
|  | EBECRYL® 284 | (Parts) | 5 | 5 | 35 |  |  |  |
|  | CN 929 | (Parts) | -- | -- | -- | -- | -- | 15 |
| Oligomer (B) | ACTILANE® 300 | (Parts) | -- | -- | -- | -- | 10 | -- |
|  | KAYARAD® UX-0937 | (Parts) | 30 | -- | -- | -- | -- | -- |
|  | EBECRYL® 230 | (Parts) | -- | 30 | -- | 25 | -- | 10 |
|  | KAYARAD@ UX-4101 | (Parts) | -- | -- | 5 | -- | -- | -- |
|  | CN 966J75 | (Parts) | -- | -- | -- | -- | -- | -- |
| Oligomer | ACTILANE® 251 | (Parts) | -- | -- | -- | -- | -- | -- |
|  | KAYARAD® DPHA-40H | (Parts) | -- | -- | -- | -- | -- | -- |
| Total Amount of Oligomers (A) and (B) |  | (Parts) | 35 | 35 | 40 | 35 | 25 | 25 |

(continued)

|  |  | Example 7 | Example 8 | Example 9 | Example 10 | Example 11 | Example 12 |
|---|---|---|---|---|---|---|---|
| Photopolymerization initiator | DAROCURE® TPO (Parts) | 11.78 | 11.78 | 11.78 | 11.78 | 11.78 | 11.78 |
|  | IRGACURE® 907 (Parts) | -- | -- | -- | -- | -- | -- |
|  | IRGACURE® 369 (Parts) | -- | -- | -- | -- | -- | -- |
|  | Chivacure® ITX (Parts) | -- | -- | -- | -- | -- | -- |
| Antigelling agent | IRGASTAB® UV10 (Parts) | 0.2 | 0.2 | 0.2 | 0.2 | 0.2 | 0.2 |
| Surface tension modifier | BYK®-UV3510 (Parts) | 0.02 | 0.02 | 0.02 | 0.02 | 0.02 | 0.02 |

[Table 4]

| | | | Example 13 | Example 14 | Example 15 | Example 16 | Com. Ex. 1 | Com. Ex. 2 |
|---|---|---|---|---|---|---|---|---|
| Colorant | MA-8 | (Parts) | 2 | 2 | 2 | 2 | 2 | 2 |
| | LA-2 | (Parts) | -- | -- | -- | -- | -- | -- |
| | RT343D | (Parts) | -- | -- | -- | -- | -- | -- |
| | P-BFS® | (Parts) | -- | -- | -- | -- | -- | -- |
| Pigment dispersant | SOLSPERSE 33000 | (Parts) | 1 | 1 | 1 | 1 | 1 | 1 |
| Monofunctional monomer | IO-A | (Parts) | 35 | 30 | 30 | 30 | 30 | 30 |
| | PO-A | (Parts) | 40 | 30 | 30 | 30 | 30 | 30 |
| | TEGDA | (Parts) | -- | -- | -- | -- | -- | -- |
| | EOTMPTA | (Parts) | -- | -- | -- | -- | -- | -- |
| Total Amount of Monofunctional Monomers | | (Parts) | 75 | 60 | 60 | 60 | 60 | 60 |
| Oligomer (A) | CN-1318® | (Parts) | -- | -- | -- | -- | -- | -- |
| | EBECRYL® 210 | (Parts) | 5 | 15 | 15 | 15 | 25 | - |
| | EBECRYL® 284 | (Parts) | -- | -- | -- | -- | -- | -- |
| | CN 929 | (Parts) | -- | -- | -- | -- | -- | -- |
| Oligomer (B) | ACTILANE® 300 | (Parts) | -- | -- | -- | -- | -- | -- |
| | KAYARAD® UA0937 | (Parts) | -- | -- | -- | -- | -- | -- |
| | EBECRYL® 230 | (Parts) | 5 | 10 | 10 | 10 | -- | 25 |
| | KAYARAD® UA4101 | (Parts) | -- | -- | -- | -- | -- | -- |
| | CN 966J75 | (Parts) | -- | -- | -- | -- | -- | -- |
| Oligomer | ACTILANE® 251 | (Parts) | -- | -- | -- | -- | -- | -- |
| | KAYARAD DPHA-40H | (Parts) | -- | -- | -- | -- | -- | -- |
| Total Amount of Oligomers (A) and (B) | | (Parts) | 10 | 25 | 25 | 25 | 25 | 25 |

EP 2 351 799 B1

(continued)

| | | | Example 13 | Example 14 | Example 15 | Example 16 | Com. Ex. 1 | Com. Ex. 2 |
|---|---|---|---|---|---|---|---|---|
| Photopolymerization initiator | DAROCURE® TPO | (Parts) | 11.78 | -- | 11.98 | -- | 11.78 | 11.78 |
| | IRGACURE® 907 | (Parts) | -- | 9.78 | -- | -- | -- | -- |
| | IRGACURE® 369 | (Parts) | -- | -- | -- | 11.78 | -- | -- |
| | Chivacure® ITX | (Parts) | -- | 2 | -- | -- | -- | -- |
| Antigelling agent | IRGASTAB® UV10 | (Parts) | 0.2 | 0.2 | -- | 0.2 | 0.2 | 0.2 |
| Surface tension modifier | ® BYK®-UV3510 | (Parts) | 0.02 | 0.02 | 0.02 | 0.02 | 0.02 | 0.02 |

[Table 5]

| | | C. Ex. 3 | C. Ex. 4 | C. Ex. 5 | C. Ex. 6 | C. Ex. 7 | C. Ex. | C. Ex. 9 | C. Ex. 10 |
|---|---|---|---|---|---|---|---|---|---|
| Colorant | MA-8 | (Parts) | 2 | 2 | 2 | 2 | 2 | 2 | 2 | 2 |
| | LA-2 | (Parts) | -- | -- | -- | -- | -- | -- | -- | -- |
| | RT343D | (Parts) | -- | -- | -- | -- | -- | -- | -- | -- |
| | P-BFS° | (Parts) | -- | -- | -- | -- | -- | -- | -- | -- |
| Pigment dispersant | SOLSPERSE 33000 | (Parts) | 1 | 1 | 1 | 1 | 1 | 1 | 1 | 1 |
| Monofunctional monomer | IO-A | (Parts) | 30 | 30 | 30 | 35 | 15 | 15 | 20 | 30 |
| | PO-A | (Parts) | 30 | 30 | 30 | 44 | 20 | 20 | 20 | 30 |
| | TEGDA | (Parts) | -- | -- | -- | -- | -- | -- | -- | -- |
| | EOTMPTA | (Parts) | -- | -- | -- | -- | -- | -- | -- | -- |
| Total Amount of Monofunctional Monomers | | (Parts) | 60 | 60 | 60 | 79 | 35 | 35 | 40 | 60 |
| Oligomer (A) | CN-131B | (Parts) | -- | -- | 15 | -- | -- | -- | -- | -- |
| | EBECRYL® 210 | (Parts) | -- | 15 | -- | 3 | 40 | 10 | 25 | 15 |
| | EBECRYL® 284 | (Parts) | -- | -- | -- | -- | -- | -- | -- | -- |
| | CN 929 | (Parts) | -- | -- | -- | -- | -- | -- | -- | -- |
| Oligomer (B) | ACTILANE® 300 | (Parts) | -- | -- | 10 | -- | -- | -- | -- | -- |
| | KAYARAD® UX-0937 | (Parts) | -- | -- | -- | -- | -- | -- | -- | -- |
| | EBECRYL® 230 | (Parts) | 10 | -- | -- | 3 | 10 | 40 | 20 | 10 |
| | KAYARAD® UX-4101 | (Parts) | -- | -- | -- | -- | -- | -- | -- | -- |
| | CN 966J75 | (Parts) | -- | -- | -- | -- | -- | -- | -- | 10 |
| Oligomer | ACTILANE® 251 | (Parts) | 15 | 10 | -- | -- | -- | -- | -- | -- |
| | KAYARAD® DPHA-40H | (Parts) | -- | -- | -- | -- | -- | -- | -- | -- |
| Total Amount of Oligomers (A) and (B) | | (Parts) | 10 | 15 | 25 | 6 | 50 | 50 | 45 | 25 |

(continued)

| | | C. Ex. 3 | C. Ex. 4 | C. Ex. 5 | C. Ex. 6 | C. Ex. 7 | C. Ex. | C. Ex. 9 | C. Ex. 10 |
|---|---|---|---|---|---|---|---|---|---|
| Photopolymerization initiator | DAROCURE® TPO (Parts) | 11.78 | 11.78 | 11.78 | 11.78 | 11.78 | 11.78 | 11.78 | 11.80 |
| | IRGACURE® 907 (Parts) | -- | -- | -- | -- | -- | -- | -- | -- |
| | IRGACURE® 369 (Parts) | -- | -- | -- | -- | -- | -- | -- | -- |
| | Chivacure® ITX (Parts) | -- | -- | -- | -- | -- | -- | -- | -- |
| Antigelling agent | IRGASTAB® UV10 (Parts) | 0.2 | 0.2 | 0.2 | 0.2 | 0.2 | 0.2 | 0.2 | 0.2 |
| Surface tension modifier | BYK®-UV3510 (Parts) | 0.02 | 0.02 | 0.02 | 0.02 | 0.02 | 0.02 | 0.02 | -- |

[Assessment]

With the ink compositions prepared in the Examples and Comparative Examples, the viscosity, dispersed average particle size, surface tension and storage stability were measured as follows.

[Viscosity]

The viscosity was measured at 25°C using an R100-type viscometer (manufactured by Toki Sangyo Co., Ltd.) under the condition of a rotation number of a cone of 20 rpm.

[Dispersed average particle size]

The dispersed average particle size of pigment particles was measured using a particle size distribution measuring apparatus FPER-1000 (manufactured by Otsuka Electronics Co., Ltd.).

[Surface tension]

The surface tension at 25°C was measured using a fully automatic balance-type electro surface tension meter ESB-V (manufactured by Kyowa Kagaku)

[Storage stability]

An ink composition was filled into an aluminum pouch having an interior side coated with polyethylene. A change in the viscosity of the ink composition after storage of this container at 70°C for 14 days, and the presence or absence of gellation was observed, and storage stability was assessed according to the following criteria.
A: Change in viscosity of less than 10%.
B: Change in viscosity of 10% or more.
C: Gellation proceeds in a container and an ink is turned into a solid state.
Then, with the respective ink of the Examples and Comparative Examples, the following discharging property test was performed, and the continuous discharge property was assessed.

[Continuous discharge property]

Using an inkjet recording apparatus equipped with piezo-type inkjet nozzles, a discharge property test was performed by continuously discharging an ink for 30 minutes, and the continuous discharge property was assessed according to the following criteria. This inkjet recording apparatus is provided with ink tanks, supply pipes, front chamber ink tanks right before heads, and piezo heads as an ink supply system. The ink jet recording apparatus was driven at a driving frequency of 28 KHz so that the ink can be injected at a liquid droplet size of about 6 pl, and a resolution of 1200 x 1200 dpi.
A: No deteriorated discharge occurred.
B: Nozzle default did not occur, but satellite-occurred.
C: Nozzle default occurred.
Then, with the printed films which were printed using the respective ink of the Examples and Comparative Examples, the curability, adherence, stretchability and solvent resistance were assessed as follows.

[Curability]

An ink composition was printed on a respective film made of polyvinyl chloride (PVC) or polycarbonate (PC) with a bar coater (bar coater: #6) to form a printed film having a thickness of 3 $\mu$m, respectively. The printed film was irradiated with an ultraviolet ray at a total irradiation dose of 300 mJ/cm$^2$, using ultraviolet ray LED (NCCU 001E manufactured by Nichia Corporation) as an irradiation means to produce a polymer.
The thus cured printed film was touched with a finger, the presence or absence of attachment of the ink to the finger was visually observed, and curability was assessed according to the following criteria.
A: No ink was attached to the finger.
B: No ink was attached to the finger, but a flaw was generated on a printed film surface.
C: The ink was attached to the finger.

[Adherence]

An ink composition was printed on a respective film made of polyvinyl chloride (PVC) or polycarbonate (PC) with a bar coater (bar coater:#6) to form printed films having a thickness of 3 $\mu$m. The printed film was irradiated with an ultraviolet ray at a total irradiation dose of 300 mJ/cm$^2$, using ultraviolet ray LED (NCCU 001E manufactured by Nichia Corporation) as an irradiation means.

The thus cured printed film was subjected to a cross hatch test (1 mm square; 100 pieces) for confirming the peeled state with an adhesive tape Cellotape (registered trade mark) according to JIS-K-5400. The number of peeled pieces in 100 was investigated, and adherence was assessed according to the following criteria.

A: The number of peeled pieces was 10 or less in the crosshatch test.
B: The number of peeled pieces was 11 to 20 in the crosshatch test.
C: The number of peeled pieces was 21 or more in the crosshatch test.

[Stretchability]

An ink was printed on a film made of polyvinyl chloride (PVC) with a bar coater (bar coater: #6) to form a printed film having a thickness of 3 $\mu$m. This printed film was irradiated with an ultraviolet ray at a total irradiation dose of 300 mJ/cm$^2$, using ultraviolet ray LED (NCCU 001E manufactured by Nichia Corporation) as an irradiation means. After curing, the printed film was cut into 10 mm x120 mm strips to make a measurement sample.

A position 10 mm from one end in a long side direction of the thus prepared measurement sample was fixed on a sample table, a stretched length until cracking or pealing occurred on the printed film was measured, while a position 10 mm from the other end was pulled with a hand at a rate of 1 cm/s, and stretchability was assessed according to the following criteria. The measurement environmental temperature was room temperature.

A: Even when the measurement sample was stretched 150% or more, cracking or peeling was not generated on the printed film.
B: Cracking or peeling was generated on the printed film while the measurement sample was stretched 130% to 150%.
C: Cracking or peeling was generated on the printed film while the measurement sample was stretched 120% to 130%.

[Solvent Resistance]

An ink was printed on respective films made of polyvinyl chloride (PVC) with a bar coater (bar coater: #6) to form a printed film having a thickness of 3 $\mu$m. This printed film was irradiated with an ultraviolet ray at a total irradiation dose of 300 mJ/cm$^2$, using ultraviolet ray LED (NCCU 001E manufactured by Nichia Corporation) as an irradiation means.

Then, the surface of the cured printed film was rubbed with a cotton-tipped swab soaked with methanol ten times and thereafter the surface of the film was visually observed and assessed according to the following criteria:

A: The surface of the ink film suffered from no change.
B: A part of the ink film was peeled off.
C: About a half of the ink film was peeled off.

Tables 6 to 9 show the results of the aforementioned assessment.

Table 6

| | | Example 1 | Example 2 | Example 3 | Example 4 | Example 5 | Example 6 |
|---|---|---|---|---|---|---|---|
| Viscosity | (mPa•s) | 42.8 | 43.1 | 42.9 | 43.0 | 51.2 | 42.1 |
| Dispersed average particle size | (nm) | 90.0 | 140.0 | 150.0 | 100.0 | 90.0 | 90.0 |
| Surface tension | (mN/m) | 30.0 | 29.8 | 30.2 | 30.1 | 30.4 | 30.2 |
| Storage stability | | A | A | A | A | A | A |
| Continuous discharge property | | A | A | A | A | A | A |
| Curability | PVC (3 $\mu$m) | A | A | A | A | A | A |
| | PC (3 $\mu$m) | A | A | A | A | A | A |

(continued)

| | | Example 1 | Example 2 | Example 3 | Example 4 | Example 5 | Example 6 |
|---|---|---|---|---|---|---|---|
| Adherence | PVC (3 μm) | A | A | A | A | A | A |
| | PC (3 μm) | A | A | A | A | A | A |
| Rate of elongation | | A | A | A | A | A | A |
| Solvent resistance | | A | A | A | A | A | A |

Table 7

| | | Example 7 | Example 8 | Example 9 | Example 10 | Example 11 | Example 12 |
|---|---|---|---|---|---|---|---|
| Viscosity | (mPa•s) | 60.2 | 65.8 | 52.5 | 45.0 | 51.2 | 55.2 |
| Dispersed average particle size | (nm) | 90.0 | 90.0 | 90.0 | 90.0 | 90.0 | 90.0 |
| Surface tension | (mN/m) | 29.8 | 29.9 | 30.1 | 29.7 | 29.9 | 30.2 |
| Storage stability | | A | A | A | A | A | A |
| Continuous discharge property | | A | A | A | A | A | A |
| Curability | PVC (3 μm) | A | A | A | A | A | A |
| | PC (3 μm) | A | A | A | A | A | A |
| Adherence | PVC (3 μm) | A | A | A | A | A | A |
| | PC (3 μm) | A | A | A | A | A | A |
| Rate of elongation | | A | A | A | A | A | B |
| Solvent resistance | | A | A | A | A | A | A |

Table 8

| | | Example 13 | Example 14 | Example 15 | Example 16 | Com. Ex. 1 | Com. Ex. 2 |
|---|---|---|---|---|---|---|---|
| Viscosity | (mPa•s) | 29.5 | 44.7 | 45.1 | 42.5 | 16.0 | 34.0 |
| Dispersed average particle size | (nm) | 90.0 | 90.0 | 90.0 | 90.0 | 90.0 | 90.0 |
| Surface tension | (mN/m) | 30.1 | 30.0 | 30.1 | 30.1 | 30.3 | 30.5 |
| Storage stability | | A | A | C | A | A | A |
| Continuous discharge property | | A | A | A | A | A | A |
| Curability | PVC (3 μm) | A | A | A | A | A | A |
| | PC (3 μm) | B | A | A | A | A | A |

(continued)

|  |  | Example 13 | Example 14 | Example 15 | Example 16 | Com. Ex. 1 | Com. Ex. 2 |
|---|---|---|---|---|---|---|---|
| Adherence | PVC (3 μm) | A | A | A | A | A | A |
|  | PC (3 μm) | A | A | A | A | A | A |
| Rate of elongation |  | A | A | A | A | C | A |
| Solvent resistance |  | A | A | A | A | B | C |

Table 9

|  |  | Com. Ex. 3 | Com. Ex. 4 | Com. Ex. 5 | Com. Ex. 6 | Com. Ex. 7 | Com. Ex. 8 | Com. Ex. 9 | Com. Ex. 10 |
|---|---|---|---|---|---|---|---|---|---|
| Viscosity | (mPa•s) | 40.1 | 54.2 | 48.2 | 24.6 | 95.6 | > 100 | 80.2 | 47.9 |
| Dispersion average particle size | (nm) | 90.0 | 90.0 | 90.0 | 90.0 | 90.0 | 90.0 | 90.0 | 90.0 |
| Surface tension | (mN/m) | 29.8 | 29.9 | 29.7 | 30.2 | 30.0 | 29.8 | 29.8 | 34.9 |
| Storage stability |  | A | A | A | A | A | A | A | A |
| Continuous discharge property |  | A | A | A | A | C | C | C | C |
| Curability | PVC (3 μm) | A | A | PC | C | C | PC | C | A |
|  | PC (3 pm) | A | A | C | C | A | A | A | A |
| Adherence | PVC (3 μm) | A | A | - | - | A | A | A | A |
|  | PC (3 μm) | A | A | - | - | A | A | A | A |
| Rate of elongation |  | C | C | - | - | A | A | A | A |
| Solvent resistance |  | A | A | - |  | A | A | A | A |

As shown in Tables 6-9, it is seen that the ink compositions of the Examples according to the present invention have a low viscosity of 29.5 to 65.8 mPa·s, and a surface tension of 29.7 to 30.4 mN/m, that is, they have a low viscosity and a surface tension suitable for an inkjet printing system. Therefore, the inks of the Examples have the excellent continuous discharge property. It is also seen that the inks of the Examples have excellent curability, adherence and solvent resistance, even when they are cured using a low energy ultraviolet ray LED. Further, it is seen that the inks of the Examples have excellent stretchability, and can form a printed film which suffers from less cracking or peeling even when the printed film is stretched 130% or more after curing. Furthermore, it is seen that the inks containing a hindered amine compound having a 2,2,6,6-tetramethylpiperidinyl group as an antigelling agent have excellent storage stability.
In contrast, it is seen that the inks containing either one of the reactive oligomers (A) and (B) have inferior stretchability and solvent resistance. Consequently, such inks are unsuitable in the application for marking films.
In addition, it is seen that the inks containing the monofunctional monomer and the reactive oligomers (A) and (B) in smaller or larger amounts have a high viscosity, or deteriorated stretchability and solvent resistance. If the monofunctional oligomer alone is used as an oligomer, the inks have insufficient curability. The inks containing no surface tension modifier have increased surface tension and lose the storage stability and thus turn to the inks which are not suitable for the inkjet printing system. In addition, since the printed films formed using the inks of Comparative Examples 5 and 6 were insufficient in curability, their adherence and stretchability could not be assessed.

**Claims**

1. An energy ray-curable inkjet ink composition comprising a colorant, polymerizable compounds, a photopolymerization initiator and a surface tension modifier,
wherein the polymerizable compounds contain:

    a monofunctional monomer having one ethylenic double bond in a molecule,

    (A) a reactive oligomer having a rate of elongation of 130 % or more at 25°C when the oligomer alone is polymerized and a weight average molecular weight of not less than 800 and less than 3,000, and
    (B) a reactive oligomer having a rate of elongation of 130 % or more at 25°C when the oligomer alone is polymerized and a weight average molecular weight of not less than 3,000 and not more than 8,000,
    provided that one of the reactive oligomer (A) and the reactive oligomer (B) has one or two ethylenic double bonds in a molecule, and the other has two or more ethylenic double bonds in a molecule,
    wherein the rate of elongation of the reactive oligomer is measured by mixing the oligomer, 1-hydroxycyclohexyl phenyl ketone as a polymerization initiator at a weight ratio of the oligomer to the initiator of 97:3, and methyl ethyl ketone as a diluting solvent to prepare a solution having a viscosity of 100 mPA•s at 25 °C, coating the solution on a glass plate using a bar coater so that a film thickness after drying is 50 to 100 $\mu$m to form a uniform coating film, drying the coated glass plate in a chamber kept at 60 °C for 5 minutes and irradiating the coated glass plate with UV ray from a metal halide lamp with a cumulative amount of light of 1,000 mJ/cm$^2$ to form a polymer, peeling off the resulting polymer from the glass plate and cutting it to a size of 50 mm long and 10 mm wide to obtain a measurement sample,
    measuring an elongation at break of the measurement sample using a tensile tester at a tension rate of 1 mm/sec., the measured elongation at break being used as a rate of elongation of the polymer of the oligomer alone,
    wherein a content of the monofunctional monomer is 40% by weight to 75% by weight, a content of the reactive oligomer (A) is 5% by weight to 35% by weight and a content of the reactive oligomer (B) is 5% by weight to 35% by weight, and a total content of the reactive oligomers (A) and (B) is 10% by weight to 40% by weight, each based on the whole weight of the ink composition,
    wherein the photopolymerization initiator comprises at least one polymerization initiator selected from the group consisting of:
    (C) an acylphosphine oxide initiator and
    (D) an $\alpha$-aminoalkylphenone initiator.

2. The energy ray-curable inkjet ink composition according to claim 1, wherein the reactive oligomer (A) and the reactive oligomer (B) are selected from the group consisting of the following combinations (i), (ii) and (iii):

    (i) Reactive oligomer (A): a reactive monofunctional oligomer having one ethylenic double bond in a molecule and Reactive oligomer (B): a reactive polyfunctional oligomer having two or more ethylenic double bonds in a molecule;
    (ii) Reactive oligomer (A): a reactive polyfunctional oligomer having two ore more ethylenic double bonds in a molecule and Reactive oligomer (B): a reactive monofunctional oligomer having one ethylenic double bond in a molecule;
    (iii) Reactive oligomer (A): a reactive polyfunctional oligomer having two or more ethylenic double bonds in a molecule and Reactive oligomer (B): a reactive polyfunctional oligomer having two ethylenic double bonds in a molecule.

3. The energy ray-curable inkjet ink composition according to claim 1 or 2, wherein the polymerization initiator comprises

    (D) an $\alpha$-aminoalkylphenone initiator and
    (E) a thioxanthone initiator.

4. The energy ray-curable inkjet ink composition according to any one of claims 1 to 3, wherein the surface tension modifier comprises a silicone compound having a polydimethylsiloxane structure.

5. The energy ray-curable inkjet ink composition according to claim 4, wherein the silicone compound has an ethylenic double bond in a molecule.

**6.** The energy ray-curable inkjet ink composition according to any one of claims 1 to 5, wherein the ink composition further comprises a polyfunctional monomer having two or more ethylenic double bonds in an amount of 5% by weight or less.

**7.** The energy ray-curable inkjet ink composition according to any one of claims 1 to 6, wherein the ink composition further comprises a hindered amine compound having a 2,2,6,6-tetramethylpiperidinyl group.

**Patentansprüche**

**1.** Aktinisch härtbare Tintenstrahl-Tintenzusammensetzung, umfassend ein Färbemittel, polymerisierbare Verbindungen, einen Photopolymerisationsstarter und ein Tensid,
wobei die polymerisierbaren Verbindungen Folgendes enthalten:

ein monofunktionelles Monomer, das eine einzige ethylenische Doppelbindung in einem Molekül aufweist;

(A) ein reaktives Oligomer mit einer Dehnung von 130% oder mehr bei 25 °C, wenn das Oligomer allein polymerisiert wird, und einem Gewichtsmittel des Molekulargewichts von nicht weniger als 800 und weniger als 3000; und

(B) ein reaktives Oligomer mit einer Dehnung von 130% oder mehr bei 25 °C, wenn das Oligomer allein polymerisiert wird, und einem Gewichtsmittel des Molekulargewichts von nicht weniger als 3000 und nicht mehr als 8000;

mit der Maßgabe, das entweder das reaktive Oligomer (A) oder das reaktive Oligomer (B) eine oder zwei ethylenische Doppelbindungen in einem Molekül aufweist und das andere zwei oder mehr ethylenische Doppelbindungen in einem Molekül aufweist;
wobei die Dehnung des reaktiven Oligomers dadurch gemessen wird, dass man das Oligomer, 1-Hydroxycyclohexylphenylketon als Polymerisationsstarter in einem Gewichtsverhältnis des Oligomers zum Starter von 97:3 sowie Methylethylketon als Verdünnungsmittel miteinander mischt, um eine Lösung mit einer Viskosität von 100 mPa·s bei 25 °C herzustellen;
Auftragen der Lösung auf eine Glasplatte mit Hilfe einer Stabrakel-Streichmaschine, so dass die Filmdicke nach dem Trocknen 50 bis 100 $\mu$m beträgt, unter Bildung eines gleichmäßigen Beschichtungsfilms;
Trocknen der beschichteten Glasplatte in einer auf 60 °C gehaltenen Kammer während 5 Minuten und Bestrahlen der beschichteten Glasplatte mit UV-Strahlen aus einer Metallhalogenidlampe mit einer kumulativen Lichtmenge von 1000 mJ/cm$^2$ unter Bildung eines Polymers;
Abziehen des resultierenden Polymers von der Glasplatte und Schneiden desselben auf eine Größe von 50 mm lang und 10 mm breit, um eine Messprobe zu erhalten, Messen einer Reißdehnung der Messprobe mit Hilfe einer Zugprüfmaschine bei einer Dehnungsgeschwindigkeit von 1 mm/s, wobei die gemessene Reißdehnung als Dehnung des aus dem Oligomer allein erhaltenen Polymers verwendet wird;
wobei der Gehalt des monofunktionellen Monomers 40 Gew.-% bis 75 Gew.-% beträgt, der Gehalt des reaktiven Oligomers (A) 5 Gew.-% bis 35 Gew.-% beträgt und der Gehalt des reaktiven Oligomers (B) 5 Gew.-% bis 35 Gew.-% beträgt und der Gesamtgehalt der reaktiven Oligomere (A) und (B) 10 Gew.-% bis 40 Gew.-% beträgt, jeweils bezogen auf das Gesamtgewicht der Tintenzusammensetzung;
wobei der Photopolymerisationsstarter wenigstens einen Polymerisationsstarter umfasst, der aus der Gruppe ausgewählt ist, die aus

(C) einem Acylphosphinoxid-Starter und
(D) einem $\alpha$-Aminoalkylphenon-Starter

besteht.

**2.** Aktinisch härtbare Tintenstrahl-Tintenzusammensetzung gemäß Anspruch 1, wobei das reaktive Oligomer (A) und das reaktive Oligomer (B) aus der Gruppe ausgewählt sind, die aus den folgenden Kombinationen (i), (ii) und (iii) besteht:

(i) reaktives Oligomer (A): ein reaktives monofunktionelles Oligomer, das eine einzige ethylenische Doppelbindung in einem Molekül aufweist; und reaktives Oligomer (B): ein reaktives polyfunktionelles Oligomer, das zwei oder mehr ethylenische Doppelbindungen in einem Molekül aufweist;

(ii) reaktives Oligomer (A): ein reaktives polyfunktionelles Oligomer, das zwei oder mehr ethylenische Doppelbindungen in einem Molekül aufweist; und reaktives Oligomer (B): ein reaktives monofunktionelles Oligomer, das eine einzige ethylenische Doppelbindung in einem Molekül aufweist;

(iii) reaktives Oligomer (A): ein reaktives polyfunktionelles Oligomer, das zwei oder mehr ethylenische Doppelbindungen in einem Molekül aufweist; und reaktives Oligomer (B): ein reaktives polyfunktionelles Oligomer, das zwei ethylenische Doppelbindungen in einem Molekül aufweist.

3.  Aktinisch härtbare Tintenstrahl-Tintenzusammensetzung gemäß Anspruch 1 oder 2, wobei der Polymerisationsstarter

    (D) einen $\alpha$-Aminoalkylphenon-Starter und
    (E) einen Thioxanthon-Starter
    umfasst.

4.  Aktinisch härtbare Tintenstrahl-Tintenzusammensetzung gemäß einem der Ansprüche 1 bis 3, wobei das Tensid eine Silikonverbindung mit einer Polydimethylsiloxan-Struktur umfasst.

5.  Aktinisch härtbare Tintenstrahl-Tintenzusammensetzung gemäß Anspruch 4, wobei die Silikonverbindung eine ethylenische Doppelbindung in einem Molekül aufweist.

6.  Aktinisch härtbare Tintenstrahl-Tintenzusammensetzung gemäß einem der Ansprüche 1 bis 5, wobei die Tintenzusammensetzung weiterhin ein polyfunktionelles Monomer, das zwei oder mehr ethylenische Doppelbindungen aufweist, in einer Menge von 5 Gew.-% oder weniger umfasst.

7.  Aktinisch härtbare Tintenstrahl-Tintenzusammensetzung gemäß einem der Ansprüche 1 bis 6, wobei die Tintenzusammensetzung weiterhin eine gehinderte Aminverbindung mit einer 2,2,6,6-Tetramethylpiperidinyl-Gruppe umfasst.


**Revendications**

1.  Composition d'encre pour l'impression par jet d'encre, durcissable par rayonnement actinique, comprenant un colorant, des composés polymérisables, un initiateur de photopolymérisation et un agent tensio-actif,
    dans laquelle les composés polymérisables contiennent :

    un monomère monofonctionnel ayant une double liaison éthylénique dans une molécule,

    (A) un oligomère réactif ayant un allongement de 130 % ou plus à 25 °C lorsque l'oligomère est polymérisé seul, et un poids moléculaire moyen en poids d'au moins 800 et moins de 3000, et
    (B) un oligomère réactif ayant un allongement de 130 % ou plus à 25 °C lorsque l'oligomère est polymérisé seul, et un poids moléculaire moyen en poids d'au moins 3000 et d'au plus 8000,

    à condition que soit l'oligomère réactif (A) soit l'oligomère réactif (B) ait une ou deux doubles liaisons éthyléniques dans une molécule, et que l'autre ait deux ou plus doubles liaisons éthyléniques dans une molécule,
    dans laquelle l'allongement de l'oligomère réactif est mesuré en mélangeant l'oligomère, de la 1-hydroxycyclohexyl-phényl-cétone en tant qu'initiateur de polymérisation dans un rapport pondéral de l'oligomère à l'initiateur de 97:3, et de la méthyléthylcétone en tant que solvant de dilution pour préparer une solution ayant une viscosité de 100 mPa·s à 25 °C,
    appliquer la solution sur une plaque de verre en utilisant une coucheuse à barre de manière que l'épaisseur du film après séchage est de 50 à 100 $\mu$m pour former un film de revêtement,
    sécher la plaque de verre enduite dans une chambre maintenue à 60 °C pendant 5 minutes et irradier la plaque de verre enduite avec des rayons UV provenant d'une lampe aux halogénures métalliques avec une dose de lumière de 1000 mJ/cm$^2$ pour former un polymère,
    décoller le polymère ainsi obtenu de la plaque de verre, et le couper à une taille de 50 mm de longueur et 10 mm de largeur pour obtenir un spécimen de mesure, mesurer l'allongement à la rupture du spécimen de mesure en utilisant une machine d'essai de traction à une vitesse de traction de 1 mm/s, l'allongement à la rupture mesuré étant utilisé comme l'allongement du polymère issu de l'oligomère seul,
    dans laquelle la teneur du monomère monofonctionnel est de 40 % en poids à 75 % en poids, la teneur de l'oligomère réactif (A) est de 5 % en poids à 35 % en poids, et la teneur de l'oligomère réactif (B) est de 5 % en poids à 35 % en poids, et la teneur totale des oligomères réactifs (A) et (B) est de 10 % en poids à 40 % en poids, chaque fois par rapport au poids total de la composition d'encre,
dans laquelle l'initiateur de photopolymérisation comprend au moins un initiateur de polymérisation choisi dans le groupe consistant en :

(C) un initiateur de type oxyde d'acylphosphine et
(D) un initiateur de type $\alpha$-aminoalkylphénone.

2. Composition d'encre pour l'impression par jet d'encre, durcissable par rayonnement actinique, selon la revendication 1, dans laquelle l'oligomère réactif (A) et l'oligomère réactif (B) sont choisis dans le groupe consistant en les combinaisons (i), (ii) et (iii) suivantes :

(i) oligomère réactif (A): un oligomère réactif monofonctionnel ayant une double liaison éthylénique dans une molécule, et oligomère réactif (B): un oligomère réactif polyfonctionnel ayant deux ou plus doubles liaisons éthyléniques dans une molécule ;
(ii) oligomère réactif (A): un oligomère réactif polyfonctionnel ayant deux ou plus doubles liaisons éthyléniques dans une molécule, et oligomère réactif (B): un oligomère réactif monofonctionnel ayant une double liaison éthylénique dans une molécule ;
(iii) oligomère réactif (A): un oligomère réactif polyfonctionnel ayant deux ou plus doubles liaisons éthyléniques dans une molécule, et oligomère réactif (B): un oligomère réactif polyfonctionnel ayant deux doubles liaisons éthyléniques dans une molécule.

3. Composition d'encre pour l'impression par jet d'encre, durcissable par rayonnement actinique, selon la revendication 1 ou 2, dans laquelle l'initiateur de polymérisation comprend

(D) un initiateur de type $\alpha$-aminoalkylphénone et
(E) un initiateur de type thioxanthone.

4. Composition d'encre pour l'impression par jet d'encre, durcissable par rayonnement actinique, selon l'une quelconque des revendications 1 à 3, dans laquelle l'agent tensio-actif comprend un composé silicone ayant une structure polydiméthylsiloxane.

5. Composition d'encre pour l'impression par jet d'encre, durcissable par rayonnement actinique, selon la revendication 4, dans laquelle le composé silicone a une double liaison éthylénique dans une molécule.

6. Composition d'encre pour l'impression par jet d'encre, durcissable par rayonnement actinique, selon l'une quelconque des revendications 1 à 5, dans laquelle la composition d'encre comprend en outre un monomère polyfonctionnel ayant deux ou plus doubles liaisons éthyléniques en une quantité de 5 % en poids ou moins.

7. Composition d'encre pour l'impression par jet d'encre, durcissable par rayonnement actinique, selon l'une quelconque des revendications 1 à 6, dans laquelle la composition d'encre comprend en outre un composé à base d'amine encombrée ayant un groupe 2,2,6,6-tétraméthylpiperidinyle.

**EP 2 351 799 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3619778 B

- JP 2004131725 A